# EUROPEAN PATENT SPECIFICATION

(11) **EP 3 358 184 B1**
(45) Date of publication and mention of the grant of the patent: **19.08.2020**
(21) Application number: 18155353.8
(22) Date of filing: 06.02.2018
(51) Int. Cl.: F04B 39/00, F04B 39/12

(54) **RECIPROCATING COMPRESSOR AND METHOD OF MANUFACTURING THE SAME**
HUBKOLBENVERDICHTER UND VERFAHREN ZU SEINER HERSTELLUNG
COMPRESSEUR ALTERNATIF ET SON PROCÉDÉ DE FABRICATION

(30) Priority: 07.02.2017 KR 20170016651
(43) Date of publication of application: 08.08.2018
(73) Proprietor: LG Electronics Inc., Yeongdeungpo-gu Seoul 07336 (KR)
(72) Inventor: CHO, Jaeho, 08592 Seoul (KR); KIM, Dowan, 08592 Seoul (KR)
(74) Representative: Ter Meer Steinmeister & Partner

(56) References cited:
- EP-A1- 0 073 469
- WO-A1-00/73656
- WO-A1-86/02703
- WO-A1-98/24553
- WO-A1-2013/098021
- WO-A1-2014/026262
- WO-A1-2017/194516
- FR-A1- 2 532 731
- JP-A- 2005 214 069
- US-A1- 2002 098 093
- US-A1- 2005 129 534

## Description

### BACKGROUND

### 1. Field

A reciprocating compressor and a method of manufacturing a reciprocating compressor are disclosed herein.

### 2. Background

A reciprocating compressor refers to an apparatus for suctioning in, compressing, and discharging refrigerant through a reciprocating motion of a piston in a cylinder. The reciprocating compressor may be classified as a connection type reciprocating compressor or a vibration type reciprocating compressor according to a method of driving a piston. The connection type reciprocating compressor uses a method of compressing refrigerant through a reciprocating motion of a piston connected to a rotary shaft of a drive unit or drive through a connecting rod in a cylinder, and the vibration type reciprocating compressor uses a method of compressing refrigerant through a reciprocating motion of a piston, which is connected to a movable element of a reciprocating motor to vibrate, in a cylinder.

A connection type reciprocating compressor is disclosed in Korean laid-open Patent Publication No. 10-2016-0055497, which is hereby incorporated by reference. The disclosed connection type reciprocating compressor includes a housing shell forming a closed space, a drive unit or drive provided in the housing shell to provide a drive force, a compression unit connected to a rotary shaft of the drive unit and configured to compress refrigerant through a reciprocating motion of a piston in a cylinder using the drive force from the drive unit, and a suction and discharge unit configured to suction in refrigerant and to discharge the compressed refrigerant through the reciprocating motion of the compression unit.

The suction and discharge unit includes a discharge muffler and a discharge hose connected to the discharge muffler. The discharge muffler and the discharge hose are coupled to each other using an adhesion method. With such a configuration, when high-pressure refrigerant is discharged through the discharge muffler and the discharge hose, refrigerant may leak through a connection part or connector between the discharge muffler and the discharge hose. In addition, a process of connecting the discharge muffler and the discharge hose is complicated, thereby increasing manufacturing costs. WO 86/02703 A1 discloses a hermetic motor-compressor unit for refrigeration circuits in which an intake pipe terminates at and is sealed to the outside of the casing of the unit. The outlet of this pipe into the casing is an orifice in the wall of the casing. The intake opening of the motor-compressor is provided with a connector duct in the form of a separator-silencer body which has an inlet aperture facing the outlet orifice of the intake pipe and which carries a suction cup in the form of a cup of material that is resiliently deformable in an axial sense. The bottom of the suction cup communicates with the interior of the intake duct while the edge of the suction cup is pressed into resilient engagement with the inner surface of the wall of the casing around the outlet orifice. WO 00/73656 A1 discloses a suction muffler for a hermetic compressor in which a closed motor-driven compressor includes a compression component and an electric component for driving the compression component, both of which are elastically supported within a closed vessel. A suction muffler is mounted on the compression component and includes a plurality of elements assembled together and each made of synthetic resin. One of the plurality of elements has a guide rib integrally formed therewith that is tapered down toward adjoining one of the plurality of elements, thereby facilitating an assembling work of the two elements.

### SUMMARY

In one aspect of present invention, a reciprocating compressor, comprises: a shell provided with a discharge pipe; a cylinder provided inside of the shell and having a compression chamber; a discharge muffler having a discharge chamber in which refrigerant compressed in the compression chamber flows; and a discharge hose that extends from the discharge muffler to guide discharge of the refrigerant, the discharge hose being coupled to the discharge pipe, wherein at least one portion of the discharge muffler and the discharge hose are integrally formed using injection molding.

The at least one portion of the discharge muffler and the discharge hose may be integrally formed using gas injection molding.

The reciprocating compressor may further comprise a tank having a discharge space in which the refrigerant discharged from the cylinder is stored, wherein the discharge muffler includes: a first assembly portion coupled to the tank; and a second assembly portion separably coupled to the first assembly portion and defining the discharge chamber along with the first assembly portion.

The discharge hose may be formed integrally with the second assembly portion.

The reciprocating compressor may further comprise a hose connector that extends from the second assembly portion; and a first connector provided at a first side of the discharge hose and having a flow cross sectional area less than a flow cross-sectional area of the hose connector, wherein the first connector includes a first rounded portion having an outer diameter decreasing from the hose connector toward the discharge hose.

The second assembly portion and the discharge hose may be made of nylon.

The reciprocating compressor may further comprise a connector that extends from the discharge hose and coupled to the discharge pipe, wherein the discharge hose and the connector are integrally formed.

The connector may include a connector body having an outer circumferential surface in which at least one groove is formed; and at least one ring member mounted in the at least one groove and contacting the discharge pipe.

The reciprocating compressor may further comprise a connector connection portion that extends from the connector; and a second connector provided at a second side of the discharge hose and connected to the connector connection portion, wherein the second connector includes a second rounded portion having an outer diameter increasing from the discharge hose toward the connector connection portion.

In another aspect of present invention, a method of manufacturing a reciprocating compressor, the method comprises: forming an assembly portion configuring a discharge muffler using a mold; injecting gas into the mold to implement shapes of inner circumferential surfaces of a discharge hose and a connector; and assembling a discharge pipe to the connector.

The injecting of the gas may include injecting gas after passing through an end of the connector to manufacture an overflow injection portion at the end of the connector.

The method may further comprise removing the overflow injection portion, wherein, after the overflow injection portion is removed, the discharge pipe is assembled to the connector.

In still another aspect of present invention, a reciprocating compressor, comprises: a shell provided with a discharge pipe; a cylinder provided inside of the shell and having a compression chamber; a discharge muffler in which refrigerant compressed in the compression chamber flows; a discharge hose that extends from the discharge muffler to guide discharge of the refrigerant, the discharge hose being coupled to the discharge pipe; and a connector that connects the discharge hose to the discharge pipe, wherein the discharge muffler, the discharge hose, and the connector are integrally formed.

The discharge muffler, the discharge hose, and the connector may be integrally formed using a gas ejection molding method.

The discharge hose may include a first connector that extends from the discharge muffler and having a first rounded portion; a second connector that extends from the connector and having a second rounded portion.

The discharge muffler may include a plurality of assembly portions separably coupled, and wherein the discharge hose may be formed integrally with any one of the plurality of assembling portions.

The reciprocating compressor may further comprise a tank having a discharge space in which the refrigerant discharged from the cylinder is stored, wherein the plurality of assembly portions includes: a first assembly portion coupled to the tank; and a second assembly portion separably coupled to the first assembly portion and defining a discharge chamber along with the first assembly portion.

The discharge hose may be formed integrally with the second assembly portion.

The reciprocating compressor may further comprise a hose connector that extends from the second assembly portion; and a first connector provided at a first side of the discharge hose and having a flow cross sectional area less than a flow cross-sectional area of the hose connector, wherein the first connector includes a first rounded portion having an outer diameter decreasing from the hose connector toward the discharge hose.

The second assembly portion and the discharge hose may be made of nylon.

### BRIEF DESCRIPTION OF THE DRAWINGS

Embodiments will be described in detail with reference to the following drawings in which like reference numerals refer to like elements, and wherein:
FIG. 1 is a perspective view of a reciprocating compressor according to an embodiment ;
FIG. 2 is a cross-sectional view of the reciprocating compressor of FIG. 1;
FIG. 3 is a schematic diagram showing some components of the reciprocating compressor of FIG. 1;
FIG. 4 is a front exploded perspective view of a muffler assembly and a hose assembly according to an embodiment;
FIG. 5 is a rear exploded perspective view of the muffler assembly and the hose assembly of FIG. 4;
FIG. 6 is a perspective view of the hose assembly according to an embodiment;
FIG. 7 is a diagram showing a state of forming an overflow injection portion in a process of manufacturing a hose assembly according to an embodiment;
FIG. 8 is a view showing a state after removing the overflow injection portion in the process of manufacturing the hose assembly according to the embodiment;
FIG. 9 is a cross-sectional view showing a state of coupling a hose assembly and a discharge pipe according to an embodiment; and
FIG. 10 is a view showing a state of coupling a hose assembly and a discharge pipe to a shell according to an embodiment.

### DETAILED DESCRIPTION

Hereinafter, embodiments will be described with reference to the accompanying drawings. The following embodiments are provided as examples in order to help the full understanding. Accordingly, embodiments are not limited to the following embodiments and may be variously embodied.

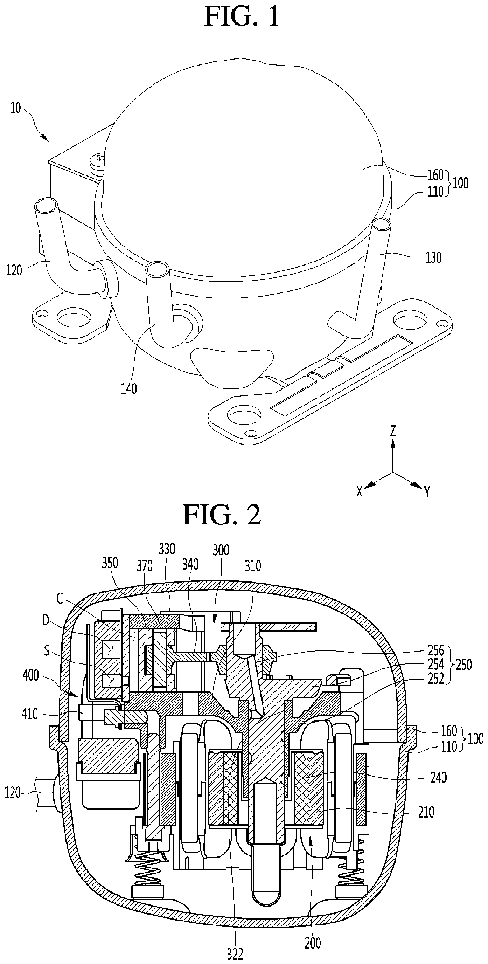

FIG. 1 is a perspective view of a reciprocating compressor according to an embodiment. FIG. 2 is a cross-sectional view of the reciprocating compressor of FIG. 1.

Referring to FIGS. 1 and 2, the reciprocating compressor 10 according to this embodiment may include a shell 100 that forms an appearance thereof. A closed space may be formed in the shell 100 and various components of the compressor 10 may be received in the closed space. The shell 100 may be made of metal, for example.

The shell 100 may include a lower shell 110 and an upper shell 160 provided above the lower shell 110. The lower shell 110 may have a substantially semispherical shape and form a reception space for receiving various components, such as a drive unit or drive 200, a compression unit 300, and a suction and discharge unit 400 along with the upper shell 160. The lower shell 110 may be referred to as a "compressor body" and the upper shell 160 may be referred to as a "compressor cover".

The lower shell 110 may include a suction pipe 120, a discharge pipe 130, a process pipe 140, and a power supply (not shown). The suction pipe 120 may supply refrigerant into the shell 100 and penetrate through the lower shell 110. The suction pipe 120 may be mounted separately from or integrally with the lower shell 110.

The discharge pipe 130 may discharge compressed refrigerant from the shell 100 and penetrate through the lower shell 110. The discharge pipe 130 may be formed separately from or integrally with the lower shell 110.

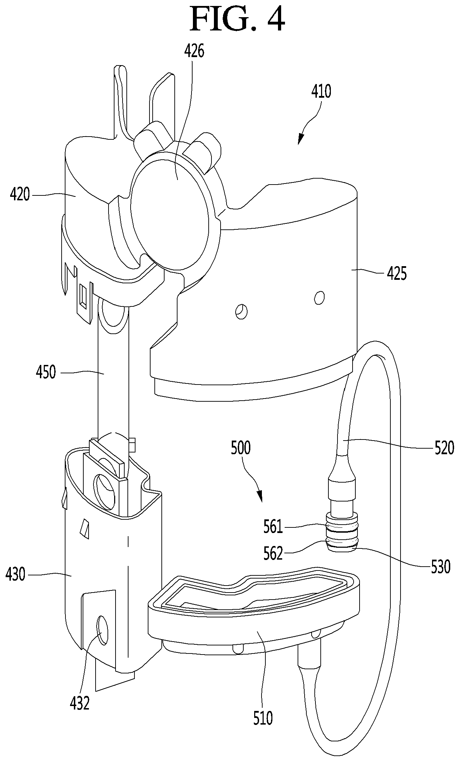

The discharge pipe 130 may be connected with a discharge hose 520 (see FIG. 4) of the suction and discharge unit 400. Refrigerant supplied into the suction pipe 120 and compressed by the compression unit 300 may be discharged to the discharge pipe 130 through the discharge hose 520 of the suction and discharge unit 400. The process pipe 140 may be provided to supply refrigerant into the shell 100 after closing an inside of the shell 100 and may penetrate through the lower shell 110.

The upper shell 160 may form the reception space along with the lower shell 110 and have an approximately semi-spherical shape like the lower shell 110. The upper shell 160 may cover an upper side of the lower shell 110 to form the closed space therein.

The drive 200 may be provided in the closed space of the shell 100 to provide a drive force. The drive 200 may include a stator 210, a rotor 240, and a rotary shaft 250. The stator 210 may include a stator core and a coil coupled to the stator core.

When power is applied to the coil, the coil generates electromagnetic force to perform electromagnetic interaction along with the stator core and the rotor 240. Therefore, the drive 200 may generate a drive force for a reciprocating motion of the compression unit 300.

A magnet may be provided in the rotor 240 and be rotatably provided in the coil. A rotary force generated by rotation of the rotor 240 acts as a drive force capable of driving the compression unit 200.

The rotary shaft 250 may be rotated along with the rotor 240 and may penetrate through the rotor 240 in a vertical direction. In addition, the rotary shaft 250 may be connected to a connector rod 340 to transfer the rotary force generated by the rotor 240 to the compression unit 300.

More specifically, the rotary shaft 250 may include a base shaft 252, a rotary plate 254, and an eccentric shaft 256. The base shaft 252 may be mounted in the rotor 240 in the vertical direction (Z axis) or a longitudinal direction. When the rotor 240 rotates, the base shaft 252 may rotate along with the rotor 240. The rotary plate 254 may be mounted at one side of the base shaft 252 and may be rotatably mounted in a cylinder block 310.

The eccentric shaft 256 may protrude upward at a position located eccentrically from a center of an axis of the base shaft 252 and eccentrically rotate when the rotary plate 254 rotates. The connector rod 340 may be mounted on the eccentric shaft 256. According to eccentric rotation of the eccentric shaft 256, the connector rod 340 may linearly reciprocate in a frontward-and-rearward or horizontal direction (X axis).

The compression unit 300 may receive the drive force from the drive 200 and compress refrigerant through the linear reciprocating motion. The compression unit 300 may include the cylinder block 310, the connector rod 340, a piston 350, and a piston pin 370.

The cylinder block 310 may be provided above the rotor 240. In the cylinder block 310, a shaft opening 322, through which the rotary shaft 250 may penetrate, may be formed. A lower side of the cylinder block 310 may rotatably support the rotary plate 254.

A cylinder 330 may be provided in front of the cylinder block 310 to receive the piston 350. The piston 350 may reciprocate in the frontward-and-rearward direction and a compression space or chamber C, in which refrigerant may be compressed, may be formed in the cylinder 330.

The connector rod 340 may be a device for transferring the drive force provided by the drive 200 to the piston 350 and switching rotary motion of the rotary shaft 250 into the linear reciprocation motion. More specifically, the connector rod 340 may linearly reciprocate in the frontward-and-rearward direction upon rotation of the rotary shaft 250.

The piston 350 may be a device for compressing refrigerant and may be provided in the cylinder 330. In addition, the piston 350 may be connected to the connector rod 340 and linearly reciprocate in the cylinder 330 according to a motion of the connector rod 340. According to the reciprocating motion of the piston 350, refrigerant received through the suction pipe 120 may be compressed in the cylinder 330.

The piston pin 370 may couple the piston 350 and the connector rod 340. More specifically, the piston pin 370 may penetrate through the piston 350 and the connector rod 340 in the frontward-and-rearward direction to connect the piston 350 and the connector rod 340.

The suction and discharge unit 400 may be configured to suction in refrigerant to be supplied to the compression unit 300 and to discharge the compressed refrigerant from the compression unit 300. The suction and discharge unit 400 may include a muffler assembly 410 and a hose assembly 500.

The muffler assembly 410 may transfer the refrigerant suctioned in from the suction pipe 120 into the cylinder 330 and transfer the refrigerant compressed in the compression space C of the cylinder 330 to the discharge pipe 130. In the muffler assembly 410, a suction space or chamber S for receiving refrigerant suctioned in from the suction pipe 120 and a discharge space or chamber D for receiving refrigerant compressed in the compression space C of the cylinder 330.

The refrigerant suctioned in from the suction pipe 120 may be supplied into the suction space S of a suction and discharge tank 426 through suction mufflers 430 and 420. In addition, the refrigerant compressed in the cylinder 330 may pass discharge mufflers 425 and 510 through the discharge space D of the suction and discharge tank 426, thereby being discharged from the compressor 10 through the discharge hose 520.

The discharge hose 520 may be a device for transferring the compressed refrigerant received in the discharge space D to the discharge pipe 130 and may be formed integrally with a fourth assembly part or portion (discharge muffler) 510 of the muffler assembly 410. That is, one or a first side of the discharge hose 520 may be formed integrally with the fourth assembly portion 510 of the muffler assembly 410 to communicate with the discharge space D and the other or a second side of the discharge hose 520 may be coupled to the discharge pipe 130 through a connector 530. The discharge hose 520 and the connector 530 may be integrally formed.

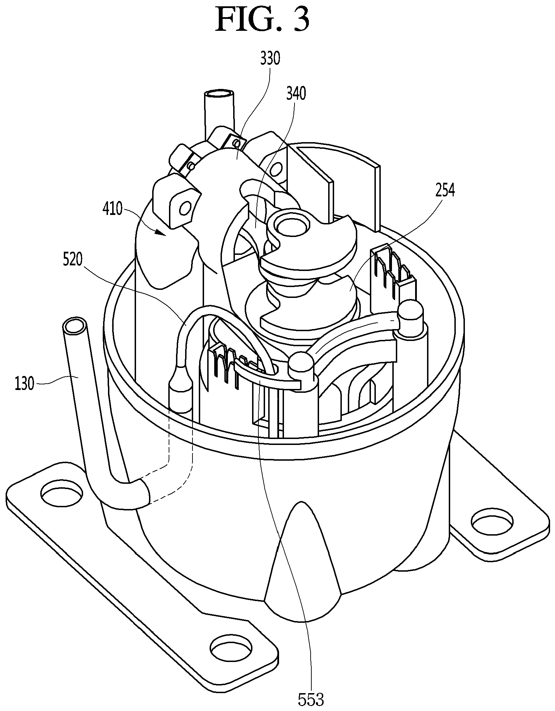

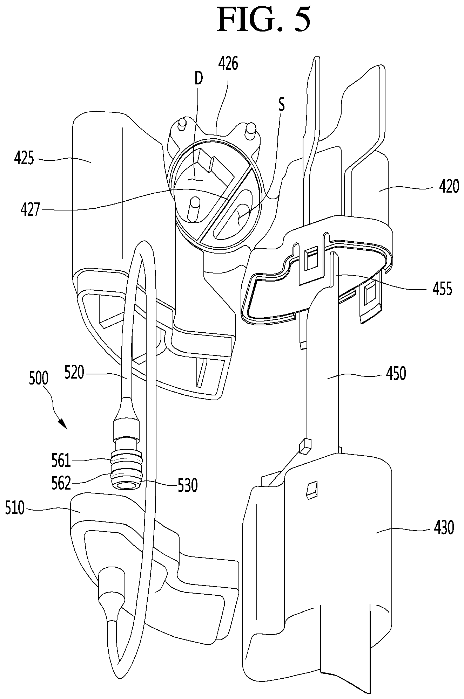

FIG. 3 is a schematic diagram showing components of the reciprocating compressor according to the embodiment. FIG. 4 is a front exploded perspective view of a muffler assembly and a hose assembly according to an embodiment. FIG. 5 is a rear exploded perspective view of the muffler assembly and the hose assembly according to an embodiment.

Referring to FIGS. 3 to 5, the muffler assembly 410 according to this embodiment may include a first assembly part or portion (suction muffler) 430, a second assembly part or portion (suction muffler) 420, a third assembly part or portion (discharge muffler) 425, and the fourth assembly part or portion (discharge muffler) 510. The first assembly portion 430 may include a suction hole 432 that communicates with the suction pipe 120. The suction hole 432 may be located adjacent to an inside of a point of the lower shell 110, to or at which the suction pipe 120 may be coupled. An internal pipe 450 may be mounted in the first assembly portion 430. For example, the internal pipe 450 may include an approximately cylindrical pipe.

The internal pipe 450 may extend from the first assembly portion 430 upward, thereby being coupled to the second assembly portion 420. The second assembly portion 420 may include a pipe fixing part or portion coupled with the internal pipe 450. The internal pipe 450 may include a second coupling part or portion 455 coupled to the pipe fixing part.

The second assembly portion 420 may be coupled to an upper side of the first assembly portion 430. At least a portion of the internal pipe 450 may be located inside of the first assembly portion 430 and the other portion thereof may be located inside of the second assembly portion 420.

When the first assembly portion 430 and the second assembly portion 420 are coupled, a suction flow channel in which the refrigerant supplied to the compressor 10 may flow toward the cylinder 330 is formed in the first and second assembly portions 430 and 420. Accordingly, the first and second assembly portions 430 and 420 may be collectively referred to as a "suction muffler".

The third assembly portion 425 may be spaced apart from one or a first side of the second assembly portion 420. In addition, the suction and discharge tank 426 forming the suction space S and the discharge space D may be mounted between the second assembly portion 420 and the third assembly portion 425. The suction and discharge tank 426 may include a partitioning part or partition 427 that partitions an internal space of the suction and discharge tank 426 into the suction space S and the discharge space D. In addition, a valve assembly (not shown) may be provided at one side of the suction and discharge tank 426. The valve assembly may include a suction valve (not shown) that opens and closes the suction space S and a discharge valve (not shown) that opens and closes the discharge space D.

The fourth assembly portion 510 may be coupled to a lower side of the third assembly portion 425. When the third assembly portion 425 and the fourth assembling portion 510 are coupled, a discharge flow channel in which the refrigerant discharged from the cylinder 330 flows toward the discharge pipe 130 may be formed in the third and fourth assembly portions 425 and 510. Accordingly, the third and fourth assembly portions 425 and 510 may be collectively referred to as a "discharge muffler". The discharge muffler may include a refrigerant discharge room or chamber defined by the third and fourth assembly portions 425 and 510.

The third assembly portion 425 may be referred to as a "first discharge muffler" and the fourth assembly portion 510 may be referred to as a "second discharge muffler". The first discharge muffler 425 and the second discharge muffler 510 may be separably coupled.

The discharge hose 520 may extend from the fourth assembly portion 510. The discharge hose 520 and the fourth assembly portion 510 may be integrally formed. For example, the discharge hose 520 and the fourth assembly portion 510 may be integrally manufactured using an injection molding method. The injection molding method may be understood as a method of injecting molten resin into a mold having a predetermined shape and cooling the resin to manufacture a product having a desired shape.

The fourth assembly portion 510 and the discharge hose 520 formed integrally may be referred to as "hose assembly 500". That is, the fourth assembly portion 510 of the discharge mufflers 425 and 510 and the discharge hose 520 may be integrally formed to form the hose assembly 500. The fourth assembly portion 510 and the third assembly portion 425 may be coupled to configure an assembly of the discharge muffler and the discharge hose.

The discharge hose 520 may transfer refrigerant in the fourth assembly portion 510 to the discharge pipe 130. One or a first side of the discharge hose 520 may be coupled to the fourth assembly portion 510 and the other or a second side thereof may be coupled to the discharge pipe 130 by the connector 530. The connector 530 and the discharge hose 520 may be integrally formed using an injection molding method.

That is, the fourth assembly portion 510, the discharge hose 520, and the connector 530 may be integrally formed through injection molding. For example, the fourth assembly portion 510 may be formed through a general injection method using a mold and the discharge hose 520 and the connector 530 may be formed using a gas injection method.

The gas injection method refers to a method of injecting gas to a mold when supplying molten resin into the mold and molding the resin, and may be used to manufacture a hollow product. For example, the gas may include nitrogen gas.

In the case of gas injection, as an amount of resin may be reduced by an amount of injected gas, an amount of a raw material may be reduced. In addition, gas may be injected into a part or portion, an outer diameter of which is changed, of a product, that is, a bendable part or portion of the product to easily implement a rounded or tapered shape, thereby improving a strength of the product.

The discharge hose 520 may extend from the fourth assembly portion 510 toward the discharge pipe 130 and may be curved or bent once or more to be disposed in the restricted internal space of the shell 100.

A substantially central part or portion of the discharge hose 520 may be supported by a hose fixing part or portion 553. The hose fixing portion 553 may be configured to clamp the discharge hose 520. For example, the hose fixing portion 553 may have a shape of tongs and may be disposed to surround at least a portion of an outer circumferential surface of the discharge hose 520. The discharge hose 520 may be located to be spaced apart from an inner side surface of the shell 100 by the hose fixing portion 553.

The discharge pipe 130 may penetrate through the lower shell 110 to extend to the inside of the lower shell 110 and the discharge hose 520 may be connected to the discharge pipe 130. For example, the discharge pipe 130 may penetrate through the lower shell 110 and may be bent and extend upward. By this configuration, in a state in which the discharge pipe 130 is assembled in the shell 100, the connector 530 and the discharge hose 520 formed integrally may be easily assembled in the discharge pipe 130. That is, although the internal space of the shell 100 is small and crowded due to the components of the compressor, it may be easy to assemble the connector 530 and the discharge hose 520 using tools, for example.

The second assembly portion 510 and the discharge hose 520 may be formed through injection molding and may be made of engineering plastic, for example. For example, the engineering plastic may be composed of PA66, which is nylon resin. When the second assembly portion 510 and the discharge hose 520 are made of PA66, as thermal resistance is excellent, it is possible to provide an environment in which high-temperature refrigerant may sufficiently flow. The discharge pipe 130 may be made of metal, such as copper (Cu), for example.

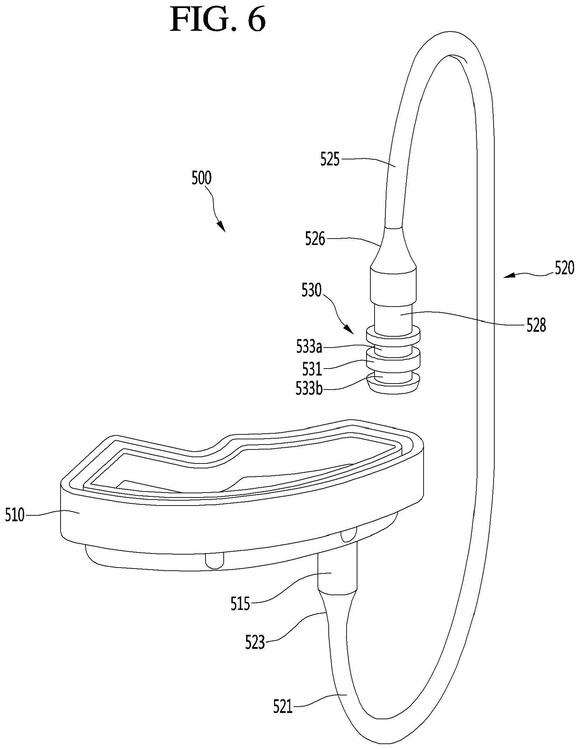

FIG. 6 is a perspective view of a hose assembly according to an embodiment. Referring to FIGS. 5 and 6, the hose assembly 500 according to this embodiment may include the fourth assembly portion 510 configuring a portion of the discharge mufflers 425 and 510, the discharge hose 520 formed integrally with the fourth assembly portion 510 to guide discharge of refrigerant, and the connector 530 formed integrally with the discharge hose 520 to connect the discharge hose 520 to the discharge pipe 130.

The connector 530 may be formed integrally with the fourth assembly portion 510 and the discharge hose 520 and may be made of engineering plastic, such as PA66, which is nylon resin, for example. The connector 530 may include a connector body 531 having first and second grooves 533a and 533b. The connector body 531 may have a substantially cylindrical shape and the first and second grooves 533a and 533b may be formed in a circumferential direction of the connector body 531 and disposed to be spaced apart from each other in the upward-and-downward direction.

The first and second grooves 533a and 533b may include first groove 533a formed in an upper portion of the connector body 531 and second groove 533b formed in a lower portion of the connector body 531. A ring member may be mounted in each of the first and second grooves 533a and 533b. The ring member may include a first ring member 561 mounted in the groove 533a and a second ring member 562 mounted in the second groove 533b. The first and second ring members 561 and 562 may be made of rubber or synthetic resin, for example.

The connector body 531 may be inserted into the discharge pipe 130 in a state in which the first and second ring members 561 and 562 are coupled to an outer circumferential surface of the connector body 531. By a caulking process of reducing an inner diameter of the discharge pipe 130, the first and second ring members 561 and 562 may be brought into contact with the discharge pipe 130.

That is, as the first and second ring members 561 and 562 are interposed between an outer circumferential surface of the connector 530 and an inner circumferential surface of the discharge pipe 130, the connector 530 may be stably supported inside of the discharge pipe 130. If a plurality of ring members is provided, such an effect may be further improved.

The hose assembly 500 may include a hose connection part or connector 515 that extends from the fourth assembly portion 510 to be connected to the discharge hose 520. For example, the hose connector 515 may extend from the fourth assembly portion 510 downward. The hose connector 515 may be formed to have a flow cross sectional area greater than a flow cross-sectional area of the discharge hose 520 in order to improve mobility of refrigerant when refrigerant in the discharge mufflers 425 and 510 having a large volume flows to the discharge hose 520 having a relatively small cross sectional area.

The discharge hose 520 may include a first connection part or connector 521 that extends from the hose connector 515. The hose connector 515 and the first connector 521 may be integrally formed. A flow cross sectional area of the first connector 521 or the discharge hose 520 may be less than the flow cross-sectional area of the hose connector 515.

The first connector 521 may include a first rounded part or portion 523 rounded or tapered from the hose connector 515 to gradually reduce an outer diameter of the first connector 521. When the outer diameter is rapidly changed from the hose connector 515 toward the first connector 521, an inner diameter of the discharge hose 520 forming a flow channel of refrigerant may not be uniform and a strength of the hose assembly 500 may be reduced, thereby causing damage. Accordingly, in this embodiment, the first rounded portion 523 may be provided at a connection part or portion between the hose connector 515 and the discharge hose 520, such that the outer diameter is slowly changed (reduced) from the hose connector 515 to the first connector 521.

The hose assembly 500 may include a connector connection part or portion 528 that extends from the discharge hose 520 to the connector 530. The discharge hose 520, the connector connection portion 528 and the connector 530 may be integrally formed. The discharge hose 520 may include a second connection part or connector 525 connected to the connector connection portion 528.

An outer diameter of the connector connection portion 528 may be greater than an outer diameter of the discharge hose 520. In order to prevent the diameter from being rapidly changed from the discharge hose 520 toward the connector connection portion 528, the second connector 525 may include a second rounded part or portion 526 rounded or tapered from the second connector 525. The second rounded portion 526 enables an outer diameter of the second connector 525 to be slowly increased from the discharge hose 520 toward the connector connection portion 528. By the first and second rounded portions 523 and 526, the inner diameter of the discharge hose 520 may be uniform and a strength of the discharge hose 520 may be increased.

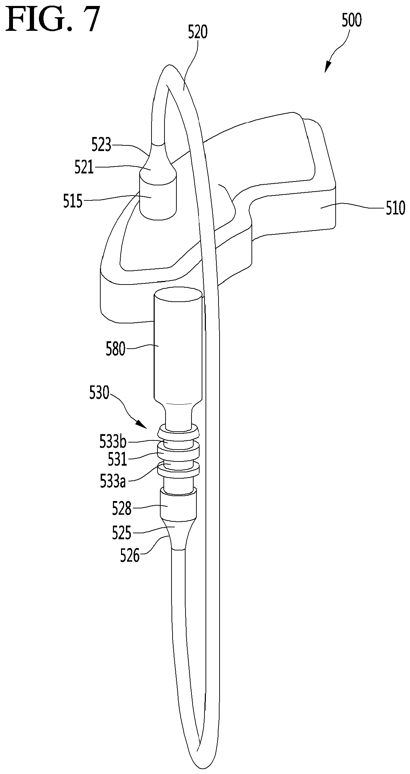

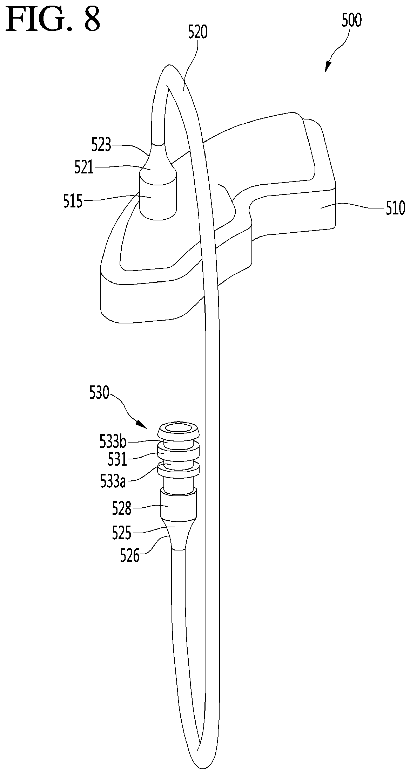

FIG. 7 is a diagram showing a state of forming an overflow injection portion in a process of manufacturing a hose assembly according to an embodiment. FIG. 8 is a view showing a state after removing the overflow injection portion in the process of manufacturing the hose assembly according to the embodiment.

The method of manufacturing the hose assembly 500 according to the embodiment will be described with reference to FIGS. 7 and 8. The hose assembly 500 may be manufactured by the injection molding process, more specifically, a step of forming an appearance of the fourth assembly portion 510 of the hose assembly 500 through general injection molding using a mold. The gas injection molding process of injecting gas to the mold through the discharge hose 520 and the connector 530 having a hollow shape of the hose assembly 500 and implementing the hollow shape, that is, shapes of inner circumferential surfaces of the discharge hose 520 and the connector 530, by the injected gas may be performed.

The inner diameters of the discharge hose 520 and the connector 530 may be uniform as a factor defining a flow cross sectional area of refrigerant. If the inner diameter is not uniform, mobility of refrigerant may be reduced. As described above, in order to implement the hollow shape, when gas is injected from the hose connector 515 toward the connector 530, if injection of gas is stopped at a point corresponding to an end of the connector 530, the inner diameter of the end of the connector 530 may be reduced.

Accordingly, in embodiments disclosed herein, in the gas injection molding process, gas is additionally injected after passing through the end of the connector 530, such that a diameter of the connector 530 is uniform (constant) up to the end of the connector 530. More specifically, referring to FIG. 7, when gas is additionally injected in the gas injection process of the hose assembly 500, an overflow injection part or portion 580 formed by resin overflowing with the discharge hose 520 or the connector 530 may be formed at the end of the connector 530. The overflow injection portion 580 may have a hollow cylindrical shape. By the overflow injection portion 580, the discharge hose 520 and the connector 530 may have uniform inner diameters.

Thereafter, a step of removing the overflow injection portion 580 may be performed and a step of coupling the discharge pipe 130 to the connector 530 may be performed. FIG. 8 shows the configuration of the hose assembly 500 after removing the overflow injection portion 580.

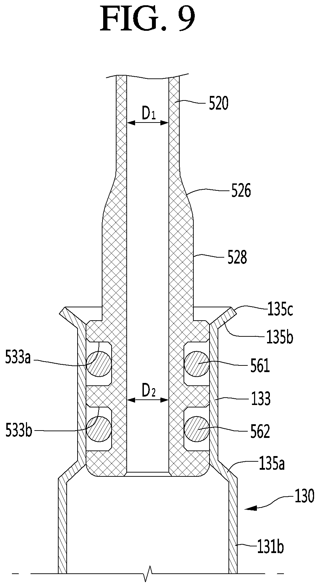

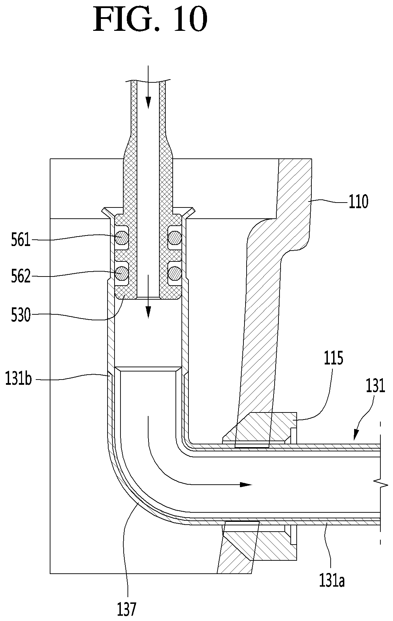

FIG. 9 is a cross-sectional view showing a state of coupling a hose assembly and a discharge pipe according to an embodiment. FIG. 10 is a view showing a state of coupling a hose assembly and a discharge pipe to a shell according to an embodiment.

Referring to FIG. 9, the inner diameters of the discharge hose 520 and the connector 530 may become uniform by the gas injection molding process. For example, inner diameter D1 of the discharge hose 520 and inner diameter D2 of the connector 530 may have a same value.

The discharge pipe 130 may include a pipe body 131 coupled to the lower shell 110. The pipe body 131 may include a first body part or body 131a that penetrates through the lower shell 110 and a second body part or body 131b that extends from the first body 131a upward.

The lower shell 110 may include a pipe coupling part or portion 115 coupled to the first body 131a. The pipe coupling portion 115 may be disposed to be inserted into the lower shell 110 and to surround an outer circumferential surface of the first body 131a.

The discharge pipe 130 may further include bending part or portion 137 provided between the first body 131a and the second body 131b. The bending portion 137 may be bent at a predetermined curvature to extend from the first body 131a to the second body 131b. In addition, the hose assembly 500 may be coupled to an upper part or portion of the second body 131b. By the discharge pipe 130 and the hose assembly 500, even in the restricted internal space of the shell 100, the discharge hose 520 and the connector 530 may be inserted into the discharge pipe 130 downward at an upper side of the discharge pipe 130, thereby easily being assembled.

The second body 131b may include a caulking part or portion 133 provided outside of the first and second ring members 561 and 562. An inner diameter of the caulking portion 133 may be less than an inner diameter of the pipe body 131.

A process of assembling the hose assembly 500 and the discharge pipe 130 will be described. The hose assembly 500 may be inserted into the discharge pipe 130, and a process of reducing the inner diameter of a part or portion, in which the first and second ring members 561 and 562 are located, of the discharge pipe 130, that is, the caulking process, may be performed. By the caulking process, the caulking portion 133 may be formed as shown in FIG. 8. The caulking portion 133 may be adhered to the first and second ring members 561 and 562.

By the caulking process, a reduction part or portion 135a may be formed at one or a first side of the caulking portion 133 and an enlargement part or portion 135b may be formed at the other or a second side thereof. The reduction portion 135a may be formed between the second body 131b and the caulking portion 133 and may obliquely extend from the second body 131b toward the caulking portion 133 in a direction in which the inner diameter is reduced.

The enlargement portion 135b may be formed at end 135c of the discharge pipe 130, into which the hose assembly 500 may be inserted, and may obliquely extend from the caulking portion 133 toward the end 135c in a direction in which the inner diameter is enlarged. Refrigerant flowing through the discharge hose 520 may be transferred to the discharge pipe 130 through the internal space of the connector 530. That is, spaces formed by inner circumferential surface sides of the discharge hose 520 and the connector 530 may form a refrigerant discharge flow channel.

According to embodiments disclosed herein, the discharge muffler and the discharge hose may be integrally configured or formed to remove a connection part or connector between the discharge muffler and the discharge hose, thereby preventing compressed refrigerant having a high pressure from leaking from the hose assembly. In particular, the discharge muffler and the discharge hose may be integrally configured or formed using a gas injection molding method, thereby simplifying a manufacturing process and reducing manufacturing costs.

Further, a part or portion, an outer diameter of which may be changed from the discharge muffler toward the discharge hose, may be rounded or tapered, thereby maintaining a strength of the hose assembly. Furthermore, if gas injection is stopped at an end of the connector upon manufacturing the discharge hose and the connector using gas injection, the inner diameter of the end of the connector may be decreased. However, in embodiments disclosed herein, an overflow region of injected gas may be provided to provide the overflow injection portion, thereby making inner diameters of the discharge hose and the connector uniform.

Therefore, embodiments disclosed herein provide a reciprocating compressor in which a discharge muffler, a discharge hose, a discharge pipe are integrally configured or formed. Embodiments disclosed herein further provide a reciprocating compressor capable of maintaining a strength of a hose assembly by rounding or tapering a portion, an outer diameter of which is changed from a discharge muffler toward a discharge hose. Embodiments disclosed herein also provide a reciprocating compressor capable of enabling injected gas to overflow to prevent inner diameters of a discharge hose and a connector from decreasing, when gas injection is performed in a process of manufacturing a hose assembly.

A reciprocating compressor according to embodiments disclosed herein may include a discharge muffler forming a discharge room or chamber in which refrigerant compressed in a compression chamber may flow and a discharge hose that extends from the discharge muffler to guide discharge of the refrigerant and coupled to the discharge pipe. At least a portion of the discharge muffler and the discharge hose may be integrally configured or formed using injection molding. Therefore, it is possible to prevent refrigerant from leaking from a connection part or connector between the discharge muffler and the discharge hose and to simplify the process of manufacturing the compressor. The injection molding may include gas injection molding.

The discharge muffler may include a third assembly part or portion coupled to a suction and discharge tank, and a fourth assembly part or portion separably coupled to the third assembly part and defining the discharge room along with the third assembly part. The discharge hose may be configured or formed integrally with the fourth assembly part.

A connector that extends from the discharge hose and coupled to the discharge pipe may be further included, and the discharge hose and the connector may be integrally configured or formed. The connector may include a connector body having an outer circumferential surface having a groove formed therein and a ring member mounted in the groove and contacting the discharge pipe, thereby stably connecting the connector and the discharge pipe.

A hose connection part or connector that extends from the fourth assembly part and a first connection part or portion provided at one or a first side of the discharge hose and having a flow cross sectional area less than a flow cross-sectional area of the hose connection part may be further included.

The first connection part may include a first rounded part or portion having an outer diameter that decreases from the hose connection part toward the discharge hose. A connector connection part or portion that extends from the connector and a second connection part or portion provided at the other or a second side of the discharge hose and connected to the connector connection part may be further included.

The second connection part may include a second rounded part or portion having an outer diameter increasing from the discharge hose toward the connector connection part. The fourth assembly part and the discharge hose may be made of nylon.

A method of manufacturing a reciprocating compressor according to embodiments disclosed herein may include forming an assembly part or portion configuring a discharge muffler using a mold, injecting gas into the mold to implement shapes of inner circumferential surfaces of a discharge hose and a connector and assembling a discharge pipe in the connector. The injecting of the gas may include additionally injecting gas after passing through an end of the connector to manufacture an overflow injection part at an end of the connector. The method may further include removing the overflow injection part, and, after the overflow injection part is removed, the discharge pipe may be assembled in the connector.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments. The features mentioned in the description in combination with the word "may" are to be regarded as characterising the subject-matter and NOT only as an option.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A reciprocating compressor, comprising:
a shell (100) provided with a discharge pipe (130);
a cylinder (330) provided inside of the shell (100) and having a compression chamber (C);
a muffler assembly (410) having a discharge chamber in which refrigerant compressed in the compression chamber (C) flows; and
a discharge hose (520) that extends from the muffler assembly (410) to discharge the refrigerant, the discharge hose (520) being coupled to the discharge pipe (130),
**characterized in that** at least one portion of the muffler assembly (410) and the discharge hose (520) are integrally formed using injection molding.

2. The reciprocating compressor according to claim 1, wherein the at least one portion of the muffler assembly (410) and the discharge hose (520) are integrally formed using gas injection molding.

3. The reciprocating compressor according to claim 1 or 2, further comprising a tank (426) having a discharge space (D) in which the refrigerant discharged from the cylinder (330) is stored.

4. The reciprocating compressor according to claim 1, 2 or 3, wherein the muffler assembly (410) includes a suction muffler (430, 420) and a discharge muffler (425, 510).

5. The reciprocating compressor according to claim 4, wherein the discharge muffler (425, 510), comprises:
a first assembly portion (425) coupled to the tank (426); and
a second assembly portion (510) separably coupled to the first assembly portion (425) and defining the discharge chamber with the first assembly portion (425).

6. The reciprocating compressor according to claim 5, wherein the discharge hose (520) is formed integrally with the second assembly portion (510).

7. The reciprocating compressor according to claim 5 or 6, further comprising:
a hose connector (515) that extends from the second assembly portion (510); and
a first connector (521) provided at a first side of the discharge hose (130) and having a flow cross sectional area less than a flow cross-sectional area of the hose connector (515), wherein the first connector (521) includes a first rounded portion (523) having an outer diameter decreasing from the hose connector (515) toward the discharge hose (520).

8. The reciprocating compressor according to claim 5, 6 or 7, wherein the second assembly portion (510) and the discharge hose (520) are made of nylon.

9. The reciprocating compressor according to any one of claims 1 to 8, further comprising a connector (530) that extends from the discharge hose (520) and coupled to the discharge pipe (130).

10. The reciprocating compressor according to claim 9, wherein the discharge hose (130) and the connector (530) are integrally formed.

11. The reciprocating compressor according to claim 9 or 10, wherein the connector (530) includes:
a connector body (531) having an outer circumferential surface in which at least one groove (533a, 533b) is formed; and
at least one ring member (561, 562) mounted in the at least one groove (533a, 533b) and contacting the discharge pipe (130).

12. The reciprocating compressor according to any one of claims 9 to 11, further comprising:
a connector connection portion (528) that extends from the connector (530); and
a second connector (525) provided at a second side of the discharge hose (520) and connected to the connector connection portion (528), wherein the second connector (525) includes a second rounded portion (526) having an outer diameter increasing from the discharge hose (520) toward the connector connection portion (528).

13. A method of manufacturing a reciprocating compressor, the method comprising:
forming an assembly portion (510) configuring a muffler assembly (410) using a mold;
injecting gas into the mold to implement shapes of inner circumferential surfaces of a discharge hose (520) and a connector (530), wherein at least one portion of the muffler assembly (410) and the discharge hose (520) are integrally formed; and
assembling a discharge pipe (130) to the connector (530).

14. The method according to claim 13, wherein the injecting of the gas includes injecting gas after passing through an end of the connector (530) to manufacture an overflow injection portion at the end of the connector (530).

15. The method according to claim 14, further comprising removing the overflow injection portion, wherein, after the overflow injection portion is removed, the discharge pipe (130) is assembled to the connector (530).

## Patentansprüche

1. Kolbenkompressor, der Folgendes umfasst:
ein Gehäuse (100), das mit einem Auslassrohr (130) versehen ist;
einen Zylinder (330), der im Inneren des Gehäuses (100) vorgesehen ist und eine Kompressionskammer (C) aufweist;
eine Schalldämpferbaugruppe (410), die eine Auslasskammer aufweist, in der ein Kühlmittel strömt, das in der Kompressionskammer (C) komprimiert worden ist; und
einen Auslassschlauch (520), der sich von der Schalldämpferbaugruppe (410) erstreckt, um das Kühlmittel auszulassen, wobei der Auslassschlauch (520) mit dem Auslassrohr (130) gekoppelt ist,
**dadurch gekennzeichnet, dass** zumindest ein Abschnitt der Schalldämpferbaugruppe (410) und der Auslassschlauch (520) unter Verwendung von Spritzgießen einteilig ausgebildet sind.

2. Kolbenkompressor nach Anspruch 1, wobei zumindest ein Abschnitt der Schalldämpferbaugruppe (410) und der Auslassschlauch (520) unter Verwendung von Gasspritzgießen einteilig ausgebildet sind.

3. Kolbenkompressor nach Anspruch 1 oder 2, der ferner einen Behälter (426) umfasst, der einen Auslassraum (D) aufweist, in dem das Kühlmittel, das aus dem Zylinder (330) ausgelassen wird, gelagert wird.

4. Kolbenkompressor nach Anspruch 1, 2 oder 3, wobei die Schalldämpferbaugruppe (410) einen Ansaugschalldämpfer (430, 420) und einen Auslassschalldämpfer (425, 510) enthält.

5. Kolbenkompressor nach Anspruch 4, wobei der Auslassschalldämpfer (425, 510) Folgendes umfasst:
einen ersten Baugruppenabschnitt (425), der mit dem Behälter (426) gekoppelt ist; und
einen zweiten Baugruppenabschnitt (510), der mit dem ersten Baugruppenabschnitt (425) trennbar gekoppelt ist und mit dem ersten Baugruppenabschnitt (425) die Auslasskammer definiert.

6. Kolbenkompressor nach Anspruch 5, wobei der Auslassschlauch (520) mit dem zweiten Baugruppenabschnitt (510) einteilig ausgebildet ist.

7. Kolbenkompressor nach Anspruch 5 oder 6, der ferner Folgendes umfasst:
einen Schlauchverbinder (515), der sich vom zweiten Baugruppenabschnitt (510) erstreckt; und
einen ersten Verbinder (521), der auf einer ersten Seite des Auslassschlauchs (130) vorgesehen ist und eine Strömungsquerschnittsfläche aufweist, die kleiner als eine Strömungsquerschnittsfläche des Schlauchverbinders (515) ist, wobei der erste Verbinder (521) einen ersten abgerundeten Abschnitt (523) enthält, der einen Außendurchmesser aufweist, der vom Schlauchverbinder (515) in Richtung des Auslassschlauchs (520) abnimmt.

8. Kolbenkompressor nach Anspruch 5, 6 oder 7, wobei der zweite Baugruppenabschnitt (510) und der Auslassschlauch (520) aus Nylon hergestellt sind.

9. Kolbenkompressor nach einem der Ansprüche 1 bis 8, der ferner einen Verbinder (530) umfasst, der sich vom Auslassschlauch (520) erstreckt und mit dem Auslassrohr (130) gekoppelt ist.

10. Kolbenkompressor nach Anspruch 9, wobei der Auslassschlauch (130) und der Verbinder (530) einteilig ausgebildet sind.

11. Kolbenkompressor nach Anspruch 9 oder 10, wobei der Verbinder (530) Folgendes enthält:
einen Verbinderkörper (531), der eine Außenumfangsfläche aufweist, in der mindestens eine Rille (533a, 533b) ausgebildet ist; und
mindestens ein Ringelement (561, 562), das in der mindestens einen Rille (533a, 533b) angebracht ist und das Auslassrohr (130) berührt.

12. Kolbenkompressor nach einem der Ansprüche 9 bis 11, der ferner Folgendes umfasst:
einen Verbinderverbindungsabschnitt (528), der sich vom Verbinder (530) erstreckt; und
einen zweiten Verbinder (525), der auf einer zweiten Seite des Auslassschlauchs (520) vorgesehen und mit dem Verbinderverbindungsabschnitt (528) verbunden ist, wobei der zweite Verbinder (525) einen zweiten abgerundeten Abschnitt (526) enthält, der einen Außendurchmesser aufweist, der vom Auslassschlauch (520) in Richtung des Verbinderverbindungsabschnitts (528) zunimmt.

13. Verfahren zum Herstellen eines Kolbenkompressors, wobei das Verfahren Folgendes umfasst:
Bilden eines Baugruppenabschnitts (510), der eine Schalldämpferbaugruppe (410) konfiguriert, unter Verwendung einer Form;
Einspritzen von Gas in die Form, um die Formen der Innenumfangsflächen eines Auslassschlauchs (520) und eines Verbinders (530) zu implementieren, wobei zumindest ein Abschnitt der Schalldämpferbaugruppe (410) und der Auslassschlauch (520) einteilig ausgebildet werden; und
Anfügen eines Auslassrohrs (130) an den Verbinder (530).

14. Verfahren nach Anspruch 13, wobei das Einspritzen des Gases das Einspritzen von Gas, nachdem es durch ein Ende des Verbinders (530) geströmt ist, um an dem Ende des Verbinders (530) einen Überlaufeinspritzabschnitt herzustellen, enthält.

15. Verfahren nach Anspruch 14, das ferner das Entfernen des Überlaufeinspritzabschnitts enthält, wobei das Auslassrohr (130) an den Verbinder (530) angefügt wird, nachdem der Überlaufeinspritzabschnitt entfernt worden ist.

## Revendications

1. Compresseur alternatif, comportant :
une coque (100) pourvue d'un tuyau d'évacuation (130) ;
un cylindre (330) agencé à l'intérieur de la coque (100) et ayant une chambre de compression (C) ;
un ensemble de silencieux (410) ayant une chambre d'évacuation dans laquelle s'écoule du fluide frigorigène comprimé dans la chambre de compression (C) ; et
un flexible d'évacuation (520) qui s'étend à partir de l'ensemble de silencieux (410) pour évacuer le fluide frigorigène, le flexible d'évacuation (520) étant couplé au tuyau d'évacuation (130),
**caractérisé en ce qu'**au moins une partie de l'ensemble de silencieux (410) et le flexible d'évacuation (520) sont formés d'un seul tenant en utilisant un moulage par injection.

2. Compresseur alternatif selon la revendication 1, dans lequel la au moins une partie de l'ensemble de silencieux (410) et le flexible d'évacuation (520) sont formés d'un seul tenant en utilisant un moulage par injection de gaz.

3. Compresseur alternatif selon la revendication 1 ou 2, comportant en outre un réservoir (426) ayant un espace d'évacuation (D) dans lequel est stocké le fluide frigorigène évacué à partir du cylindre (330).

4. Compresseur alternatif selon la revendication 1, 2 ou 3, dans lequel l'ensemble de silencieux (410) inclut un silencieux à l'aspiration (430, 420) et un silencieux au refoulement (425, 510).

5. Compresseur alternatif selon la revendication 4, dans lequel le silencieux au refoulement (425, 510) comporte :
une première partie d'assemblage (425) couplée au réservoir (426) ; et
une seconde partie d'assemblage (510) couplée à la première partie d'assemblage (425) de manière séparable et définissant la chambre d'évacuation avec la première partie d'assemblage (425).

6. Compresseur alternatif selon la revendication 5, dans lequel le flexible d'évacuation (520) est formé d'un seul tenant avec la seconde partie d'assemblage (510).

7. Compresseur alternatif selon la revendication 5 ou 6, comportant en outre :
un raccord de flexible (515) qui s'étend à partir de la seconde partie d'assemblage (510); et
un premier raccord (521) agencé sur un premier côté du flexible d'évacuation (130) et ayant une aire de section transversale d'écoulement inférieure à une aire de section transversale d'écoulement du raccord de flexible (515), dans lequel le premier raccord (521) inclut une première partie arrondie (523) ayant un diamètre extérieur diminuant à partir du raccord de flexible (515) vers le flexible d'évacuation (520).

8. Compresseur alternatif selon la revendication 5, 6 ou 7, dans lequel la seconde partie d'assemblage (510) et le flexible d'évacuation (520) sont en nylon.

9. Compresseur alternatif selon l'une quelconque des revendications 1 à 8, comportant en outre un raccord (530) qui s'étend à partir du flexible d'évacuation (520) et couplé au tuyau d'évacuation (130).

10. Compresseur alternatif selon la revendication 9, dans lequel le flexible d'évacuation (130) et le raccord (530) sont formés d'un seul tenant.

11. Compresseur alternatif selon la revendication 9 ou 10, dans lequel le raccord (530) inclut :
un corps de raccord (531) ayant une surface circonférentielle extérieure dans laquelle au moins une gorge (533a, 533b) est formée ; et
au moins un élément annulaire (561, 562) monté dans la au moins une gorge (533a, 533b) et venant en contact avec le tuyau d'évacuation (130).

12. Compresseur alternatif selon l'une quelconque des revendications 9 à 11, comportant en outre :
une partie de liaison de raccord (528) qui s'étend à partir de raccord (530) ; et
un second raccord (525) agencé sur un second côté du flexible de refoulement (520) et relié à la partie de liaison de raccord (528), dans lequel le second raccord (525) inclut une seconde partie arrondie (526) ayant un diamètre extérieur augmentant à partir du flexible d'évacuation (520) vers la partie de liaison de raccord (528).

13. Procédé de fabrication d'un compresseur alternatif, le procédé comportant les étapes consistant à :
former une partie d'assemblage (510) configurant un ensemble de silencieux (410) en utilisant un moule ;
injecter du gaz dans le moule pour implémenter des formes de surfaces circonférentielles intérieures d'un flexible d'évacuation (520) et d'un raccord (530), dans lequel au moins une partie de l'ensemble de silencieux (410) et du flexible d'évacuation (520) sont formés d'un seul tenant ; et
assembler un tuyau d'évacuation (130) au raccord (530).

14. Procédé selon la revendication 13, dans lequel l'injection du gaz inclut l'injection de gaz après un passage à travers une extrémité de raccord (530) pour fabriquer une partie d'injection de trop-plein à l'extrémité du raccord (530).

15. Procédé selon la revendication 14, comportant en outre le retrait de la partie d'injection de trop-plein, dans lequel, après le retrait de la partie d'injection de trop-plein, le tuyau d'évacuation (130) est assemblé au raccord (530).
